# EUROPÄISCHE PATENTSCHRIFT

(11) **EP 0 435 305 B1**
(45) Veröffentlichungstag und Bekanntmachung des Hinweises auf die Patenterteilung: **10.11.1993**
(21) Anmeldenummer: 90125626.3
(22) Anmeldetag: 28.12.1990
(51) Int. Cl.: C02F 11/12, F26B 3/00

(54) **Vorrichtung zur Trocknung von Klärschlamm**
Device for the drying of sewage sludges
Dispositif pour le sèchage de boues d'épuration

(30) Priorität: 29.12.1989 DE 3943275
(43) Veröffentlichungstag der Anmeldung: 03.07.1991
(73) Patentinhaber: MASCHINEN WITTE GmbH & CO. KG, D-49176 Hilter (DE)
(72) Erfinder: Wagner, Richard, Dr. Dr.-Ing., W-4500 Osnabrück (DE); Witte, Karl-Heinz, W-4517 Hilter a.T.W. (DE)
(74) Vertreter: Busse & Busse Patentanwälte

(56) Entgegenhaltungen:
- EP-A- 0 315 041
- DE-A- 2 226 440
- GB-A- 1 473 283
- US-A- 3 010 216
- H.E. Babbitt, "SEWERAGE AND SEWAGE TREATMENT", 1947, 6. Ausgabe, John Wiley & Sons, New York, NY (US)#

## Beschreibung

Die Erfindung betrifft eine Vorrichtung nach dem Oberbegriff des Anspruchs 1.

Die Trocknung von Schlämmen, insbesondere Klärschlämmen, ist ein wichtiger Schritt für die kostengünstige und umweltverträgliche Entsorgung, da beispielsweise Klärschlamm mit einem Feststoffgehalt von etwa 7 bis 20% hauptsächlich aus Wasser besteht. Nachdem die Entsorgung von Schlämmen inzwischen sehr viel sorgfältiger gehandhabt wird als früher und zu einer Deponierung oder zu einer sonstigen Ausbringung von in immer größeren Mengen anfallendem Klärschlamm oft weite Wege gefahren werden müssen, ist es lohnend, den Schlämmen an Ort und Stelle das Wasser zumindest weitestgehend zu entziehen und damit Fracht zu sparen. Gleichzeitig läßt sich der Klärschlamm bei einer Aufbereitung so konditionieren, daß die erhaltene Trockenmasse sehr viel besser wiederverwendet werden kann. Auch mikrobiologisch sind einschneidende Verbesserungen zu erzielen, wenn durch Anwendung von Wärme und Vakuum die vorhandenen Zellorganellen gesprengt und damit Bakterien und Viren nahezu vollständig abgetötet werden. Der behandelte Klärschlamm ist damit mikrobiologisch problemlos. Soweit nicht eine unzulässige Anreicherung an Schwermetallen wie Blei oder Cadmium enthalten ist, läßt er sich als Boden verwenden. Bei einer entsprechenden Veredlung ist die Trockenmasse auch als Dünger brauchbar.

Zur Trocknung von Schlämmen sind bereits Anlagen vorgeschlagen worden, die vorzugsweise mehrstufig arbeiten, indem etwa ein Klärschlamm zunächst mechanisch entwässert und dann in beheizbare Vakuumbehälter verbracht wird, die mit Rührwerken ausgestattet sind. Wegen der Kostspieligkeit solcher Anlagen erscheinen diese nur im zentralen Einsatz für größere Regionen rentabel mit der Folge, daß doch wieder zunächst einmal Schlamm mit weit überwiegendem Wasseranteil zur Trocknung transportiert werden muß. Derartige Umstände sind auch wieder kostentreibend.

Aufgabe der Erfindung ist es, eine Vorrichtung zur Trocknung von Schlamm zu schaffen, die kostengünstig bereitstellbar, einfach zu handhaben, baulich kompakt und in der Arbeitsweise zuverlässig ist, so daß sie an dem Ort, an dem der zu trocknende Schlamm anfällt, z.B. bei einem Klärwerk, rentabel eingesetzt werden kann.

Gemäß der Erfindung wird diese Aufgabe von der Vorrichtung nach dem Anspruch 1 ausgehend mit den kennzeichnenden Merkmalen des Anspruchs 1 gelöst.

Mit der erfindungsgemäßen Lösung wird ein Behälter eingesetzt, der nicht nur mit der rotationsbedingten Umwälzung des Klärschlamms eine Lockerung und Öffnung des Materials für den Austritt von Dampf bewirkt. Als wichtiger noch erweist sich, daß die umlaufende Behälterwandung Feuchtigkeit aus dem Schlamm in Form eines großflächigen Feuchtigkeitsfilms mitnimmt, der eine dementsprechend große Verdampfungsfläche bildet und eine hohe Verdampfungsleistung ermöglicht. Diese Leistung wird mit einer relativ unkomplizierten Bauform erzeugt, was im Hinblick auf die Verwendung in kommunalen Einsatzbereichen und die wünschenswerte Überschaubarkeit des Arbeitsverfahrens günstig ist. Die entsprechenden Bauformen können auch robust genug ausgelegt werden, damit eine solche Vorrichtung nicht störungsanfällig ist.

Über die Abzugsleitung wird die verdampfte und abgezogene Feuchtigkeit in einem Kühler kondensiert und in einem Flüssigkeitssammler abgeschieden. Damit ist es möglich, dem Schlamm den Feuchtigskeitsgehalt weitgehend zu entziehen, ohne diesen in die Umgebung auszubringen, was bei einer solchen Massenbehandlung sonst Umweltbelastungen und Besorgnisse hervorrufen würde.

In der EP-A-0 315 041 ist bereits ein Vakuum-Drehtrockner in Doppelkonus-Form beschrieben worden, der eine Vielzahl von Behandlungsmöglichkeiten für eingeschlossenes Gut erlaubt und neben dem Trocknen auch das Mischen und Granulieren von Material ermöglichen soll. Hierzu ist neben der Eingabe von Material und Behandlungsmitteln auch eine Erwärmung der abschließbaren Behandlungskammer und deren Evakuierung möglich.

Es versteht sich, daß die Oberfläche der Behälterinnenwand zusätzlich vergrößert werden kann, indem man sie mit geeigneten Profilierungen, Rippen oder dergleichen versieht, die auch für das mechanische Durcharbeiten des Schlamms oder der sich im Laufe der Trocknung ergebenden Trockenmasse nützlich sein können.

Vorteilhafterweise ist ein solcher Behälter in Form einer Drehtrommel ausgebildet und mit einer Heizeinrichtung versehen. Eine einfache Bauform, eine überschaubare Funktion und kompakte Abmessungen sind damit leicht erzielbar. Überdies ist es möglich, eine verschließbare Öffnung am Umfang und eine einfache Beschickung und Entleerung vorzusehen, indem der Klärschlamm bei nach oben weisender Öffnung eingefüllt wird und die Trockenmasse nach unten ausgeleitet wird, wenn die Öffnung der Drehtrommel nach unten weist.

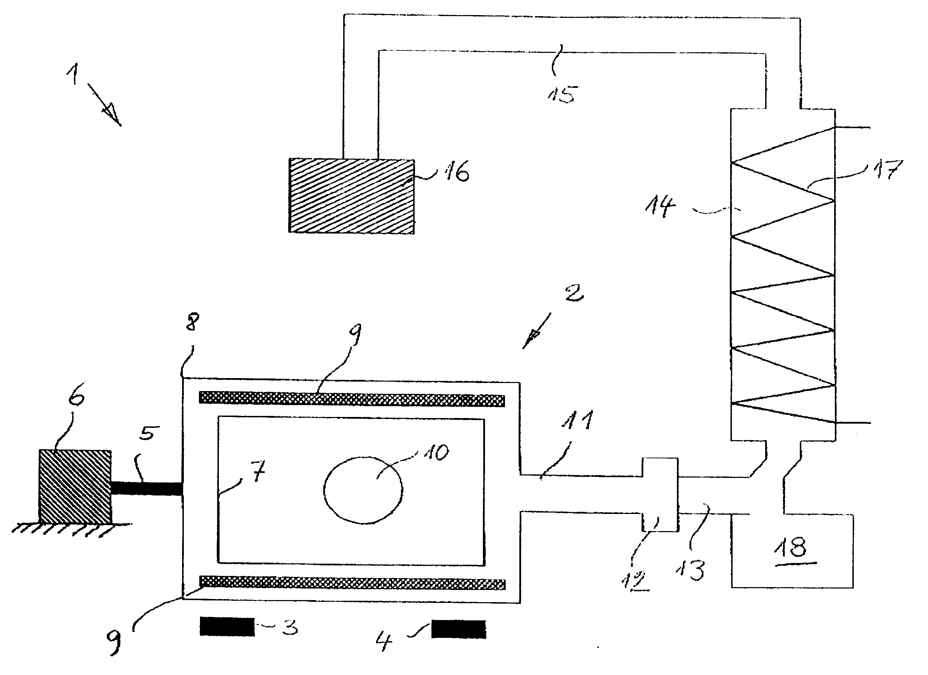

Ein Ausführungsbeispiel für den Gegenstand der Erfindung ist in der Zeichnung dargestellt und wird nachfolgend näher beschrieben.

Die einzige Figur der Zeichnung gibt in einem schematisierten Schaubild eine insgesamt mit 1 bezeichnete Vorrichtung wieder. Kernstück der Vorrichtung 1 ist eine Drehtrommel 2, die auf Rollen (paaren) 3,4 aufgelagert und über eine Welle 5 durch einen Drehantrieb 6 in Form eines Elektromotors antreibbar ist. Die Drehtrommel 2 ist doppelwandig ausgebildet mit einem inneren Behälter 7 und einem äußeren Behälter 8, wobei in der Doppelwandung eine Heizeinrichtung 9 in Form einer elektrischen Widerstandsheizung angeordnet ist, die in einem Heizbad geeigneter Flüssigkeit, z.B. einem isolierenden Öl, liegt. Die Stromzuführung zur Heizeinrichtung 9 erfolgt über eine (nicht dargestellte) Kupplung in der Welle 5, die eine Stromübertragung über Schleifringe und Bürsten auf die Drehtrommel ermöglicht. Die Drehtrommel 2 enthält auch eine hermetisch abschließbare Beschickungs- und Entleerungsöffnung 10 für die Eingabe von Klärschlamm und das Ausbringen von Trockenmasse.

Die Drehtrommel ist an dem dem Drehantrieb 6 gegenüberliegenden Stirnende mit einem axial herausführenden Abzugsrohr 11 versehen, das über eine Drehmuffe 12 mit einer feststehenden Abzugsleitung 13 verbunden ist. Diese führt zu einem Kühler 14, der seinerseits über eine weitere Leitung 15 an eine Vakuumpumpe 16 angeschlossen ist. Der Kühler 14 ist mit Kühlschlangen 17 ausgestattet und unterseits mit einem Sammler 18 verbunden.

Die Vakuumpumpe 16 ist dazu vorgesehen, in der Drehtrommel 2 den Innendruck auf 6 bis 10 kPa abzusenken. Wird gleichzeitig die Temperatur im Behälter mit Hilfe der Heizeinrichtung 9 auf 30° C bis 60° C, vorzugsweise 40 bis 50° C, angehoben, dann führt dies zu einer starken Verdampfung des Wassers aus dem Klärschlamm. Im Kühler wird das verdampfte Wasser kondensiert und in der Vorlage (Sammler 18) gesammelt. Das sich ergebende, weitgehend saubere Wasser fällt dann im Sammler 18 an.

Es ist auch baulich vorteilhaft, den Kühler 14, den Sammler 18 und die Vakuumpumpe 16 stationär zu betreiben und über die Kupplung 12 von der Drehtrommel abzukoppeln. Dies zwingt allerdings dazu, die Drehmuffe 12 nicht nur hinreichend druckdicht auszubilden, daß sie auch im robusten Dauerbetrieb keine Nebenluft eintreten läßt, sie muß insbesondere auch einen hinreichenden Querschnitt aufweisen, der den Zutritt der Saugleistung der Vakuumpumpe 16 zur Drehtrommel 2 nicht beeinträchtigt.

Die vorstehende Ausführungsform hat sich ganz besonders vorteilhaft herausgestellt. In verschiedenen konstruktiven Einzelheiten gibt es aber Alternativen, die fallweise vorteilhaft sein können. So kann der Antrieb über die Auflagerrollen angekoppelt oder über ein gesondertes Reib- oder Zahnrad zum Umfang der Drehtrommel 2 hin erfolgen, um die Drehtrommel 2 leichter auswechselbar zu gestalten und mögliche Schwierigkeiten bei der axialen Ausrichtung von Drehtrommel und Antrieb zu vermeiden. Bei Übertragung der Antriebsbewegung über eine Drehwelle 5 (wie im vorstehend beschriebenen Ausführungsbeispiel) ist es auch zweckmäßig, eine flexible Kupplung vorzusehen, die einen eventuellen Axialversatz oder einen axialen Winkel auszugleichen gestattet.

Grundsätzlich ist es auch möglich, den Kühler 14 und ggf. auch die Vakuumpumpe 16 direkt an die Drehtrommel 2 anzukoppeln und somit die Drehmuffe 12 einzusparen. Dabei kann die Stromversorgung für die Vakuumpumpe 16 über jene Schleifringe erfolgen, die auch die Widerstandsbeheizung 9 der Drehtrommel 2 anschließen.

In umgekehrter Hinsicht ist es grundsätzlich möglich, nur den inneren Teil der Drehtrommel mit der Innenwandung 7 umlaufen zu lassen, ein äußeres Gehäuse entsprechend der Wandung 8 dagegen stillstehend auszubilden, wobei sich auch eine insgesamt stationäre Zuleitung zum Kühler 14 und zur Vakuumpumpe 16 ergäbe. Der innere Teil oder die Innentrommel müßte dann innerhalb des vakuumdichten Außengehäuses gelagert und angetrieben werden.

Wesentliche Gesichtspunkte bei der konstruktiven Gestaltung der Vorrichtung ist in jedem Fall die Preiswürdigkeit und die unproblematische Verwendbarkeit, die es Anwendern ohne großen Aufwand an Gestehungskosten und Unterhaltung ermöglichen soll, Klärschlamm und sonstige Schlämme bis auf eine geringe Restfeuchte von z.B. 3% bis 4% Wasser zu trocknen und damit nicht nur Transportkosten zu senken, sondern auch ein Material zu erhalten, daß mikrobiologisch unbedenklich, d.h. steril, ist und das sich gut ausbringen, vermischen oder verarbeiten läßt.

Für einen selbsttätigen Ablauf des Trocknungsprozesses läßt sich die Temperatur des Klärschlamms auswerten, die bei konstanter Beheizung rasch ansteigt, wenn das Wasser (weitgehend) entzogen ist. Sobald also die Temperatur einen vorgegebenen Meßwert überschritten hat, kann der Trocknungsprozeß beendet werden.

## Patentansprüche

1. Vorrichtung zur Trocknung von Klärschlamm unter Einwirkung von Vakuum und Wärme, wobei der Schlamm in einem geschlossenen Behälter bewegt wird, der mit einer Abzugsleitung für Brüden verbunden ist, dadurch gekennzeichnet, daß der Behälter als mit einer Heizeinrichtung (9) ausgestattete Drehtrommel (2) ausgebildet ist, die um eine vorwiegend waagerechte Achse (Welle 5, axiales Rohr 11) drehbar gelagert und durch einen Drehantrieb (6) bewegbar ausgebildet ist, wobei die Abzugsleitung (11,13) über einen Kühler (14), der mit einem Flüssigkeitssammler (18) verbunden ist, zu einer Vakuumpumpe (16) führt.

2. Vorrichtung nach Anspruch 1, dadurch gekennzeichnet, daß der Behälter (2) auf Rollen (3,4) aufgelagert ist.

3. Vorrichtung nach Anspruch 1 oder 2, dadurch gekennzeichnet, daß der Drehantrieb mit den Rollen verbunden ist.

4. Vorrichtung nach Anspruch 1 oder 2, dadurch gekennzeichnet, daß der Drehantrieb (6) über eine Antriebswelle (5) mit dem Behälter (2) verbunden ist.

5. Vorrichtung nach einem der Ansprüche 1 bis 4, dadurch gekennzeichnet, daß die Heizeinrichtung (9) in der Behälterwandung (7,8) angeordnet und in ein Heizbad eingeschlossen ist.

6. Vorrichtung nach Anspruch 5, dadurch gekennzeichnet, daß die Heizeinrichtung (9) elektrische Heizwiderstände umfaßt.

7. Vorrichtung nach einem der Ansprüche 1 bis 6, dadurch gekennzeichnet, daß der Kühler (14) feststehend ausgebildet und über eine druckdichte Drehmuffe (12) an ein axial aus dem Behälter ausmündendes Rohr (11) angeschlossen ist.

## Claims

1. An apparatus for drying sewage sludge by the action of vacuum and heat, the sludge being kept in motion in a closed container which is connected to a foul air extraction pipe, characterised in that the container is constructed as a rotary drum (2) equipped with a heating means (9) and adapted to be propelled by a rotary drive (6), the extractor pipe (11, 13) leading to a vacuum pump (16) via a cooler (14) which is connected to a fluid collector (18).

2. An apparatus according to Claim 1, characterised in that the container (2) is mounted on rollers (3, 4).

3. An apparatus according to Claim 1 or 2, characterised in that the rotary drive is connected to the rollers.

4. An apparatus according to Claim 1 or 2, characterised in that the rotary drive (6) is connected to the container (2) via a drive shaft (5).

5. An apparatus according to one of Claims 1 to 4, characterised in that the heating means (9) are disposed in the container wall (7, 8) and enclosed in a heating bath.

6. An apparatus according to Claim 5, characterised in that the heating means (9) comprise electrical heating resistors.

7. An apparatus according to one of Claims 1 to 6, characterised in that the cooler (14) is of fixed construction and is connected by a pressure-tight rotary sleeve (16) to a tube (11) emerging axially from the container.

## Revendications

1. Dispositif de séchage de boue d'épuration sous l'effet d'un vide et d'un apport de chaleur, la boue étant mise en mouvement dans une capacité fermée qui est raccordée à une conduite d'extraction pour les vapeurs, caractérisé en ce que la capacité se présente sous la forme d'un tambour rotatif (2) équipé d'un dispositif de chauffage (9), qui est monté à rotation autour d'un axe principalement horizontal (arbre 5, tube axial 11) et peut être mû par un mécanisme d'entraînement rotatif (6), la conduite d'extraction (11, 13) menant à une pompe à vide (16) via un refroidisseur (14) qui est raccordé à un collecteur de liquide (18).

2. Dispositif selon la revendication 1, caractérisé en ce que la capacité (2) est montée sur des rouleaux (3, 4).

3. Dispositif selon la revendication 1 ou 2, caractérisé en ce que le mécanisme d'entraînement rotatif est relié aux rouleaux.

4. Dispositif selon la revendication 1 ou 2, caractérisé en ce que le mécanisme d'entraînement rotatif (6) est relié à la capacité (2) via un arbre d'entraînement (5).

5. Dispositif selon l'une quelconque des revendications 1 à 4, caractérisé en ce que le dispositif de chauffage (9) est installé dans la paroi (7, 8) de la capacité et est immergé dans un bain de chauffage.

6. Dispositif selon la revendication 5, caractérisé en ce que le dispositif de chauffage (9) comprend des résistances chauffantes électriques.

7. Dispositif selon l'une quelconque des revendications 1 à 6, caractérisé en ce que le refroidisseur (14) est monté fixe et est raccordé, via un manchon rotatif étanche à la pression (12), à un tube (11) débouchant axialement de la capacité.
